(19) Europäisches Patentamt
European Patent Office
Office européen des brevets

(11) Veröffentlichungsnummer: **0 276 464 B1**

(12) # EUROPÄISCHE PATENTSCHRIFT

(45) Veröffentlichungstag der Patentschrift: **27.11.91**

(51) Int. Cl.$^5$: **C08F 222/06**, C02F 5/14

(21) Anmeldenummer: **87119000.5**

(22) Anmeldetag: **22.12.87**

(54) **Verfahren zur Herstellung von wasserlöslichen Copolymerisaten der Maleinsäure und deren Verwendung als Wasserbehandlungsmittel.**

(30) Priorität: **10.01.87 DE 3700535**

(43) Veröffentlichungstag der Anmeldung:
**03.08.88 Patentblatt 88/31**

(45) Bekanntmachung des Hinweises auf die Patenterteilung:
**27.11.91 Patentblatt 91/48**

(84) Benannte Vertragsstaaten:
**AT BE CH DE ES FR GB IT LI NL SE**

(56) Entgegenhaltungen:
**US-A- 3 755 264**
**US-A- 4 126 549**
**US-A- 4 202 955**
**US-A- 4 522 992**

**CHEMICAL ABSTRACTS, Band 56, Nr. 9, April 1962, Spalte 10386, Zusammenfassung Nr. d, Columbus, Ohio, US; J. PETIT et al.: "Copolymerization of maleic anhydride with acenaphthene"**

(73) Patentinhaber: **BASF Aktiengesellschaft**
**Carl-Bosch-Strasse 38**
**W-6700 Ludwigshafen(DE)**

(72) Erfinder: **Denzinger, Walter**
**Wormser Landstrasse 65**
**W-6720 Speyer(DE)**
Erfinder: **Hartmann, Heinrich, Dr.**
**Weinheimer Strasse 46**
**W-6703 Limburgerhof(DE)**
Erfinder: **Goeckel, Ulrich, Dr.**
**Leipziger Strasse 6**
**W-6737 Boehl-Iggelheim(DE)**
Erfinder: **Richter, Felix, Dr.**
**Kaiserstrasse 15**
**W-6835 Bruehl(DE)**
Erfinder: **Raubenheimer, Hans-Juergen**
**Benzstrasse 6**
**W-6834 Ketsch(DE)**
Erfinder: **Winkler, Ekhard, Dr.**
**Pfalzring 74**
**W-6704 Mutterstadt(DE)**

EP 0 276 464 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Aus der US-PS 3 810 834 ist bekannt, daß man hydrolysierte Polymaleinsäureanhydride mit einem Molekulargewicht von 300 bis 5000 vor der Hydrolyse oder wasserlöslichen Salzen von derartigen hydrolysierten Polymaleinsäureanhydriden bei der Wasserbehandlung einsetzt, wobei die Kesselsteinbildung vermindert und in vielen Fällen praktisch verhindert wird. Die dafür geeigneten Polymerisate werden durch Polymerisieren von Maleinsäureanhydrid in Toluol unter Verwendung von Benzoylperoxid und anschließende Hydrolyse des so erhaltenen Polymaleinsäureanhydrids hergestellt. Da die Polymerisation des Maleinsäureanhydrids nicht vollständig und die Abtrennung von nichtpolymerisiertem Maleinsäureanhydrid vom Polymerisat schwierig ist, enthalten die Polymaleinsäuren beträchtliche Mengen an Maleinsäure.

Aus der US-PS 37 55 264 sind niedrigmolekulare Copolymerisate bekannt, die 85 bis 99 Mol.% Maleinsäureanhydrid und zur Ergänzung auf 100 Mol.% Acrylsäure, Vinylacetat, Styrol oder deren Mischungen einpolymerisiert enthalten. Die Copolymerisate werden durch Copolymerisieren von Maleinsäureanhydrid in trocknen organischen Lösungsmitteln mit den genannten Monomeren bei Temperaturen von 100 bis 145 °C in Gegenwart von Peroxiden hergestellt. Als Peroxide kommen beispielsweise Di-tert.-Butylperoxid, Acetylperoxid, Dicumylperoxid, Diisopropylpercarbonat und insbesondere Benzoylperoxid in Betracht. Die Anhydridgruppen des Copolymerisates können nach der Polymerisation zu Säuregruppen hydrolysiert bzw. in die Salze überführt werden. Die wasserlöslichen Copolymerisate werden zur Verhinderung der Kesselsteinabscheidung verwendet. Der Nachteil dieses Verfahrens liegt darin, daß bei der Copolymerisation Produkte anfallen, die einen sehr hohen Gehalt an nichtpolymerisiertem Maleinsäureanhydrid aufweisen.

Aus der US-PS 4 202 955 ist ein verfahren zur Herstellung von Copolymerisaten aus Maleinsäureanhydrid und cyclischen konjugierten Dienen, wie Cyclopentadien oder Methylcyclopentadien bekannt, bei dem man als Polymerisationsinitiator Peroxide, Perester und Hydroperoxide einsetzt, die bei der Polymerisationstemperatur Halbwertszeiten von nicht mehr als 2 Stunden haben. Maleinsäureanhydrid und das cyclische konjugierte Dien können in einem Molverhältnis von etwa 5 : 1 bis 1 : 5, vorzugsweise im Molverhältnis 2 : 1 copolymerisiert werden.

Aus der US-PS 4 209 398 sind Wasserbehandlungsmittel auf Basis von Copolymerisaten aus Maleinsäure, Acrylsäure und 2-Hydroxyethylmethacrylat bekannt. Wie Versuche ergeben haben, sind Polymerisate mit der in dieser Anmeldung angegebenen Zusammensetzung nur zu einem geringen Teil in Wasser löslich.

Der vorliegenden Erfindung liegt die Aufgabe zugrunde, ein Verfahren zur Herstellung von wasserlöslichen Copolymerisaten der Maleinsäure zur Verfügung zu stellen, bei dem man Copolymerisate erhält, deren Gehalt an bekannten Maleinsäurecopolymerisate liegt, die durch Copolymerisieren von Maleinsäureanhydrid mit ethylenisch ungesättigten Monomeren und Hydrolysieren der Copolymerisate erhältlich sind. Eine weitere Aufgabe der Erfindung ist es, Produkte für die Verminderung der Kesselsteinabscheidungen bzw. Wasserhärterausscheidungen in wasserführenden Systemen zur Verfügung zu stellen, die wirksamer sind als bisher verwendete Copolymerisate.

Die Aufgaben werden erfindungsgemäß gelöst mit einem Verfahren zur Herstellung von wasserlöslichen Copolymerisaten der Maleinsäure durch Copolymerisieren von

a) 99 bis 80 Gew.-% Maleinsäureanhydrid und

b) 1 bis 20 Gew.-% eines mit Maleinsäureanhydrid copolymerisierbaren monoethylenisch ungesättigten Monomeren,

wobei die Summe der Prozentangaben (a) und (b) immer 100 beträgt, in einem aromatischen Kohlenwasserstoff bei Temperaturen von 60 bis 200C in Gegenwart von 1 bis 20 Gew.-%, bezogen auf die Monomeren a) und b), an Polymerisationsinitiatoren und Hydrolysieren der Anhydridgruppen der Copolymerisate, wenn man als Polymerisationsinitiatoren tert.-Butyl-perbenzoat, 2,5-Dimethylhexan-2,5-diperbenzoat oder Peroxiester einsetzt, die sich von gesättigten oder monoethylenisch ungesättigten Carbonsäuren ableiten. Die Copolymerisation der Monomeren (a) und (b) kann ggf. in Gegenwart von (c) bis zu 10 Gew.-% eines mindestens 2 ethylenisch ungesättigte Doppelbindungen enthaltenden Vernetzers durchgeführt werden, wobei dann die Summe der Prozentangaben (a), (b) und (c) immer 100 beträgt. Die nach den obenbeschriebenen Verfahren erhältlichen wasserlöslichen Copolymerisate, die ggf. vernetzt sein können, werden als Wasserbehandlungsmittel zur Verminderung der Kesselsteinabscheidung und Wasserhärterausscheidung in wasserführenden Systemen verwendet. Die wasserlöslichen Copolymerisate der Maleinsäure werden durch Copolymerisieren von (a) 99 bis 80, vorzugsweise 98 bis 90 Gew.-% Maleinsäure anhydrid in Gegenwart von 1 bis 20 Gew.-% eines mit Maleinsäureanhydridcopolymerisierbaren monoethylenisch ungesättigten Monomeren in einem aromatischen Kohlenwasserstoff oder in Mischungen von aromatischen Kohlenwasserstoffen erhalten. Geeignete aromatische Kohlenwasserstoffe sind beispielsweise Benzol, Toluol, Xylol, Ethylbenzol, o-, m- und p-Diethylbenzol, Isopropylbenzol, n-Propylbenzol, p-Diisopropylbenzol und Tetralin. Die Isomeren des Xylols - o-, m-, und p-Xylol - können entweder in reiner Form oder in Form der Isomerengemische eingesetzt werden, die als sogenannte technisches Xylol im Handel erhältlich sind. Vorzugsweise verwendet man als aromatische Kohlenwasserstoffe Toluol und o-Xylol. Bis zu 40 Gew.-% der aromatischen Kohlenwasserstoffe können durch aliphatische Kohlenwasserstoffe ersetzt werden. Geeignete aliphatische Kohlenwasserstoffe sind z.B. n-Hexan, Cyclohexan, n-Heptan, n-Octan, Isooctan und Decan sowie Mischungen der genannten Stoffe. Besonders wirksame Copolymerisate für die Wasserbehandlung werden jedoch in Abwesenheit von aliphatischen Kohlenwasserstoffen unter alleiniger Verwendung von aromatischen Lösemitteln hergestellt.

Bei der Copolymerisation des Maleinsäureanhydrids nach dem erfindungsgemäßen Verfahren können sämtliche mit Maleinsäureanhydrid copolymerisierbaren monoethylenisch ungesättigten Monomeren eingesetzt werden, die wasserlösliche Copolymerisate liefern. Besonders wirksame Wasserbehandlungsmittel erhält man beispielsweise, wenn man als Monomere der Gruppe (b) Hydroxyalkylester aus ethylenisch ungesättigten $C_3$- bis $C_5$-Carbonsäuren und mindestens zweiwertigen, gesättigten $C_2$- bis $C_6$-Alkoholen oder Polyalkylenglykolen, Vinylester von gesättigten $C_1$- bis $C_4$-Carbonsäuren, ethylenisch ungesättigten $C_3$- bis $C_5$-Carbonsäuren, Acrylamiden, Methylpropansulfonsäuren, Vinylphosphonsäure, Vinylsulphonsäure, Ester aus ethylenisch ungesättigten $C_3$- bis $C_5$-Carbonsäuren und einwertigen $C_1$- bis $C_{18}$-Alkoholen sowie die Di-$C_1$- bis $C_3$-Alkylamino-$C_2$- bis $C_6$-Alkylacrylate und Di-$C_1$- bis $C_3$-Alkyl amino-C2- bis C6-Alkylmethacrylate allein oder in Form von Mischungen aus 2 oder mehreren der genannten Monomeren dieser Gruppe einsetzt.

Geeignete Monomere der Gruppe (b) sind im einzelnen folgende Verbindungen: Hydroxyethylacrylat, Hydroxypropylacrylat, Hydroxybutylacrylat, Hydroxyethylmethacrylat, Hydroxypropylmethacrylat, Hydroxybutylmethacrylat, Maleinsäure-Monoethylenglykolester, der Di-Ester aus Maleinsäure und Ethylenglykol, Halbester der Maleinsäure von Propylenglykol, Halbester der Fumarsäure, die sich von Ethylenglykol oder Propylenglykol ableiten, Di-Ester von Maleinsäure, die sich von Propylenglykol ableiten, Di-Ester der Fumarsäure von Ethylenglykol, Monoester aus Acrylsäure und Polyethylenglykolen eines Molekulargewichts von 200 bis 9000, Methacrylsäureester von Polyethylenglykolen eines Molekulargewichts von 600 bis 4000, Methacrylsäureester von Polyethylenglykolen eines Molekulargewichts von 200 bis 9000, Vinylformiat, Vinylacetat, Vinylpropionat, Vinylbutyrat, Acrylsäure, Methacrylsäure, Itakonsäure, Fumarsäure, Citraconsäure, Acrylamidomethylpropansulfonsäuren, Vinylphosphonsäure, Vinylsulfonsäure, Acrylsäureestern von einwertigen $C_1$- bis $C_{18}$-Alkoholen, wie Methylacrylat, Ethylacrylat, n-Propylacrylat, Isopropylacrylat, n-Butylacrylat, Isobutylacrylat, tert.-Butylacrylat, 2-Ethylhexyl-acrylat und Stearylacrylat, sowie die Mono- und Diester der Maleinsäure mit ein wertigen $C_1$- bis $C_{18}$-Alkoholen, wie Maleinsäuremonomethylester, Maleinsäuredimethylester, Maleinsäuremonoethylester, Maleinsäurediethylester, Maleinsäuremonopropylester, Maleinsäuredipropylester, Maleinsäuremonotert.-butylester, Maleinsäuredi-tert.-butylester, Fumarsäure-mono-methylester, Fumarsäure-di-methylester, Fumarsäure-mono-tert.-butylester, Fumarsäure-di-tert.-butylester, Itakonsäuremonomethylester, Dimethylaminoethylacrylat, Dimethylaminoethylmethacrylat, Diethylaminoethylacrylat, Di-amino-ethyl-methacrylat, Dipropylaminoethylacrylat, Dipropylaminoethylmethacrylat, Dimethylaminoneopentylacrylat und Dimethylaminoneopentylmethacrylat.

Von den Monomeren der Gruppe (b) verwendet man vorzugsweise Hydroxyethylacrylat, Hydroxypropylacrylat, Hydroxybutylacrylat, Hydroxyethylmethacrylat, Hydroxypropylmethacrylat, Hydroxybutylmethacrylat, Vinylacetat, Vinylpropionat, Fumarsäuredimethylester, Maleinsäure-di-tert.-butylester, Acrylamido-2-methylpropansulfonsäure, Acrylsäure, Methacrylsäure und Vinylphosphonsäure. Die Monomeren der Gruppe (b) werden vorzugsweise in einer Menge von 1 bis 10 Gew.-%, bezogen auf die bei der Polymerisation verwendete Monomerenmischung eingesetzt.

Die Copolymerisation der Monomeren (a) und (b) kann zusätzlich noch in Gegenwart von Monomeren (c) durchgeführt werden, die bis zu 10 Gew.-%, bezogen auf die Monomerenmischung aus (a), (b) und (c), eingesetzt werden und bei denen es sich um einen mindestens 2 ethylenisch ungesättigte Doppelbindungen enthaltenen Vernetzer handelt.

Geeignete Vernetzer dieser Art sind beispielsweise Diacrylate oder Dimethacrylate von mindestens zweiwertigen gesättigten Alkoholen, z.B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylatund 3-Methylpentandioldimethacrylat. Auch die Acrylsäure-und Methacrylsäureester von Alkoholen mit mehr als 2 OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9000. Polyethylenglykole bzw. Polypropylenglykole, die für die Herstellung der Diacrylate oder Dimethacrylate

verwendet werden, haben vorzugsweise ein Molekulargewicht von jeweils 400 bis 2000. Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z.B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat. Als Vernetzer eignen sich außerdem Vinylester von ethylenisch ungesättigten $C_3$-bis $C_6$-Carbonsäuren, z.B. Vinylacrylat, Vinylmethacrylat oder Vinylitakonat. Als Vernetzer geeignet sind außerdem Vinylester von mindestens 2 Carboxylgruppen enthaltenden gesättigten Carbonsäuren sowie Di- und Polyvinylether von mindestens zweiwertigen Alkoholen, z.B. Adipinsäuredivinylester, Butandiol-divinylether und Trimethylolpropantrivinylether. Weitere Vernetzer sind Allylester ethylenisch ungesättigter Carbonsäuren, z.B. Allylacrylat und Allylmethacrylat, Allylether von mehrwertigen Alkoholen, z.B. Penta erithrittriallylether, Triallylsaccharose und Pentaallylsaccharose. Außerdem eignen sich als Vernetzer Methylenbisacrylamid, Methylenbismethacrylamid, Divinylethylenharnstoff, Divinylpropylenharnstoff, Divinylbenzol, Divinyldioxan, Tetraallylsilan und Tetravinylsilan.

Die Vernetzer können entweder allein oder in Form von Gemischen bei der Copolymerisation des Maleinsäureanhydrids eingesetzt werden. Falls man Vernetzer bei der Copolymerisation mitverwendet, werden sie vorzugsweise in einer Menge von 0,2 bis 5 Gew.-%, bezogen auf die Monomermischung aus (a), (b) und (c), eingesetzt. Als Vernetzer werden Diacrylate oder Dimethacrylate bevorzugt, die sich von Polyethylenglykolen und/oder Polypropylenglykolen eines Molekulargewichts von 400 bis 2000 ableiten.

Als Polymerisationsinitiatoren verwendet man gemäß Erfindung Peroxiester, die sich formal von gesättigten oder ethylenisch ungesättigten Carbonsäuren ableiten. Die primären Ester der Persäuren werden im allgemeinen durch Umsetzung der Bariumsalze von primären Alkylhydroperoxiden mit Acylchloriden hergestellt, während der tertiären Alkylester der Persäuren durch gleichzeitige Zugabe von verdünnten Alkalien und Acylchlorid zu tert.-Alkylhydroperoxiden erhältlich sind. Der Carbonsäureteil des Peroxiestermoleküls leitet sich von gesättigten $C_1$- bis $C_{18}$-Carbonsäuren oder von ethylenisch ungesättigten $C_3$- bis $C_{18}$-Carbonsäuren ab, vorzugsweise von jeweils gesättigten oder ethylenisch ungesättigten Carbonsäuren mit 4 bis 10 Kohlenstoffatomen. Die in Betracht kommenden Peroxiester können vereinfachend mit Hilfe der folgenden Formeln dargestellt werden:

$$R{-}O{-}O{-}\underset{\underset{O}{\|}}{C}{-}R^1 \quad (I) \quad \text{bzw.} \quad R^1{-}\underset{\underset{O}{\|}}{C}{-}O{-}O{-}R{-}O{-}O{-}\underset{\underset{O}{\|}}{C}{-}R^1 \quad (II)$$

$R^1$ bedeutet in den Formeln I und II einen gesättigten $C_1$- bis $C_{17}$-Alkyl-oder Arylrest, H oder einen ethylenisch ungesättigten $C_2$- bis $C_{17}$- Alkenylrest, der gegebenenfalls noch eine Carboxylgruppe tragen kann. Der Substituent R steht in Formel I steht für eine $C_3$- bis $C_{22}$-Alkylgruppe oder eine Alkylgruppe, die einen oder mehrere aromatische Substituenten aufweist, z.B. die Cumylgruppe. R bedeutet in Formel I vorzugsweise eine tert.-Butyl- oder tert.-Amylgruppe. Der Substituent R steht in Formel II für eine $C_2$- bis $C_{22}$-Alkylengruppe.

Beispiele für die in Betracht kommenden Alkyl- bzw. Aralkylperoxiester von Carbonsäuren sind Cumylperneodecanoat, tert.-Butyl-perneodecanoat, tert.-Amyl-perneodecanoat, tert.-Amyl-perpivalat, tert.-Butylperpivalat,tert.-Butyl-perneohexanoat, tert.-Butyl-perisobutyrat, tert.-Butyl-per-2-ethylhexanoat, tert.-Butyl-perisononanoat, tert.-Butyl-permaleinat, Test.-Butyl-perbenzoat, 2,5-Dimethylhexan-2,5-diperbenzoat und tert.-Butyl-per-3,5,5-trimethylhexanoat. Die genannten Alkylperester können entweder allein oder in Mischung bei der Polymerisation eingesetzt werden. Vorzugsweise verwendet man tert.-Butylperpivalat, tert.-Butyl-per--2-ethylhexanoat oder tert.-Butyl-perbenzoat als alleinige Initiatoren oder in Mischung untereinander bzw. auch Gemische aus diesen Peroxiestern zusammen mit anderen Alkylperoxiestern. Bezogen auf die bei der Polymerisation eingesetzten Monomeren (a), (b) und gegebenenfalls (c) verwendet man 1 bis 20, vorzugsweise 5 bis 16 Gew.-% der Peroxiester.

Die Herstellung der wasserlöslichen Copolymerisate der Maleinsäure erfolgt in zwei Verfahrensstufen. In der ersten Verfahrensstufe wird Maleinsäureanhydrid mit den Monomeren (b) in einem aromatischen Kohlenwasserstoff bei Temperaturen von 60 bis 200C in Gegenwart der obengenannten Peroxiester copolymerisiert. Sofern eine Verbreiterung des Molekulargewichts der Copolymerisate erwünscht ist, wird die Copolymerisation des Maleinsäureanhydrids und der Monomeren (b) noch zusätzlich in Gegenwart der Vernetzer (c) durchgeführt. Die Konzentration der Monomeren (a), (b) und ggf. (c) in der Lösung des aromatischen Kohlenwasserstoffs beträgt 20 bis 80, vorzugsweise 30 bis 70 Gew.-%. Die Copolymerisation

wird vorzugsweise in dem Temperaturbereich von 80 bis 150° C durchgeführt. Bei kleineren Ansätzen, bei denen die entstehende Polymerisationswärme leicht abgeführt werden kann, ist es möglich, eine Lösung von Maleinsäureanhydrid, mindestens einem Monomer (b) und ggf. (c) im aromatischen Kohlenwasserstoff durch Zugabe eines Peroxiesters und Erhitzen auf eine Temperatur in dem angegebenen Temperaturbereich der Copolymerisation zu unterwerfen. Vorteilhafter ist es dagegen, eine Lösung von Maleinsäureanhydrid, Monomer (b) und ggf. Monomer (c) in mindestens einem aromatischen Kohlenwasserstoff in einem Reaktor vorzulegen, auf die für die Polymerisation erforderliche Temperatur zu erwärmen und den Peroxiester gelöst in einem aromatischen Lösemittel auf eine Temperatur in dem obenangegebenen Bereich erhitzen und dann kontinuierlich oder absatzweise die Monomeren (a) und (b) sowie ggf. (c) in dem Maße zuführen, wie die Polymerisation abläuft.

Die Polymerisation kann jedoch auch so durchgeführt werden, daß man einen Teil des zu polymerisierend Gemisches, z.B. 5 bis 10 % des Gesamtansatzes der Monomeren, in einem Polymerisationsreaktor auf eine Temperatur in dem Bereich von 60 bis 200° C erwärmt, so daß die Polymerisation startet und dann den Rest der zu polymerisierenden Komponenten entweder in Form einer Mischung (Mischung aus Maleinsäureanhydrid, Monomer (b) und ggf. (c) und Peroxiester, gelöst in einem aromatischen Kohlenwasserstoff) oder jeweils Lösungen von Maleinsäureanhydrid und Monomer (b) sowie ggf. (c) bzw. Lösungen mindestens eines Peroxiesters in einem aromatischen Kohlenwasserstoff kontinuierlich oder absatzweise der auf Polymerisationstemperatur erhitzten Vorlage zuführt. Die Copolymerisation wird vorzugsweise unter Inertgasatmosphäre, z.B. unter Stickstoff, durchgeführt. Um die bei der Copolymerisation entstehende Wärme abzuführen, ist es technisch am einfachsten, die Polymerisation beim Siedepunkt des aromatischen Lösemittels vorzunehmen, weil die Polymerisationswärme dann mit Hilfe einer Siedekühlung aus dem System entfernt werden kann. Der Einsatz von Mischungen mehrerer aromatischer Kohlenwasserstoffe ermöglicht dabei die Einstellung geeigneter Polymerisationstemperaturen. Eine andere Möglichkeit, die Polymerisation bei der Siedetemperatur des gerade verwendeten aromatischen Kohlenwasserstoffs bzw. einer Mischung aromatischer Kohlenwasserstoffe durchzuführen, besteht darin, daß man je nach gewünschter Polymerisationstemperatur die Copolymerisation unter vermindertem bzw. unter erhöhtem Druck durchführt. Neben den oben beschriebenen diskontinuierlich ablaufenden Copolymerisationen kann das Verfahren auch für die Herstellung größerer Mengen an Copolymerisaten kontinuierlich durchgeführt werden. Für die kontinuierliche Copolymerisation benötigt man in den meisten Fällen eine Kaskade von 2 oder mehreren hintereinander geschalteten Polymerisationsreaktoren. In die beiden ersten Reaktoren werden bei einer kontinuierlichen Verfahrensführung unterschiedlich zusammengesetzte Monomerzuläufe sowie der Peroxiester kontinuierlich zudosiert. Hierbei ist es auch möglich, die gesamten Monomeren dem ersten Reaktor zuzuführen und die erforderlichen Iniatormengen auf 2 oder 3 Reaktoren zu verteilen.

Um Copolymerisate mit besonders niedrigem Restmonomerengehalt (insbesondere Maleinsäureanhydrid) herzustellen, kann an die Hauptpolymerisation eine Nachpolymerisation angeschlossen werden, die entweder bei der Temperatur durchgeführt wird, bei der auch die Hauptpolymerisation vorgenommen wurde oder man führt die Nachpolymerisation bei einer um etwa 10 bis 40° C höheren Temperatur durch. Vorzugsweise verwendet man bei der Nachpolymerisation ebenfalls Peroxiester. Für die Haupt- und Nachpolymerisation benötigt man insgesamt 1 bis 20 Gew.-% der Peroxiester. Bei der Hauptpolymerisation kann entweder die gesamte Menge an Peroxiester eingesetzt und dann die Nachpolymerisation durchgeführt werden oder man verwendet zunächst 80 bis 95 % der erforderlichen Initiatormenge bei der Hauptpolymerisation und gibt dann nach Abschluß der Hauptpolymerisation die restliche Initiatormenge zu und führt die Nachpolymerisation bei höherer Temperatur durch.

Der Umsatz an Maleinsäureanhydrid liegt bei der erfindungsgemäßen Verwendung von Peroxiestern als Initiator oberhalb von 99 %, so daß man Copolymerisate des Maleinsäureanhydrids erhält, die weniger als 1 Gew.-% nichtpolymerisiertes Maleinsäureanhydrid aufweisen. Aus der Mengenbilanz der Copolymerisation, der Elementaranalyse der Copolymerisate und aufgrund von IR-Spektren kann geschlossen werden, daß die Copolymerisate außer einpolymerisiertem Maleinsäureanhydrid und den Monomeren (b) sowie ggf. (c) noch jeweils Zerfallsprodukte der Peroxiester sowie Strukturelemente des jeweils verwendeten aromatischen Kohlenwasserstoffs in gebundener Form enthalten. Bezogen auf Maleinsäure im Copolymerisat werden bis zu 75, vorzugsweise 10 bis 65 Gew.-% an aromatischem Kohlenwasserstoff und an Zerfallsprodukten der Peroxiester in die Copolymerisate eingebaut, wenn man von einem 100%igen Umsatz des Maleinsäureanhydrids zu Polymaleinsäureanhydrid ausgeht.

Bei der erfindungsgemäßen Copolymerisation des Maleinsäureanhydrids erhält man je nach Auswahl des Lösemittels klare Polymerlösungen, Ausfällungen der Copolymerisate oder auch zwei getrennte Phasen, die jeweils das Copolymerisat enthalten, wobei die untere Phase bei Temperaturen oberhalb von 90C eine ölige Konsistenz aufweist und beim Abkühlen erstarrt. Die obere Phase besteht im wesentlichen aus einer Lösung, die das Polymere enthält. Die Polymerisate, die in den beiden verschiedenen Phasen

vorliegen, haben unterschiedliche anwendungstechnische Eigenschaften. Sie können jedoch beide gemeinsam demselben Anwendungszweck zugeführt werden, so daß eine Trennung der Polymerisate nicht erforderlich ist. Die beiden organischen Phasen können jedoch auch getrennt werden, so daß eine Fraktionierung der Copolymerisate im Zusammenhang mit dem Herstellverfahren möglich ist. Durch eine Trennung der Phasen bzw. Fraktionierung des Copolymerisates kann man besonders wirksame Wasserbehandlungsmittel herstellen. Die bei der Copolymerisation nicht in das Polymerisat eingebauten aromatischen Kohlenwasserstoffe können zurückgewonnen und erneut - selbst ohne Reinigung - bei einer nachfolgenden erneuten Copolymerisation wieder verwendet werden. Die Copolymerisation des Maleinsäureanhydrids wird bei dem erfindungsgemäßen Verfahren in Abwesenheit von Wasser durchgeführt. Die bei der Copolymerisation eingesetzten aromatischen Kohlenwasserstoffe sind praktisch wasserfrei bzw. enthalten bis höchstens 0,2 Gew.-% Wasser, d.h. Mengen an Wasser, die bei Kontakt zwischen Wasser und aromatischem Kohlenwasserstoff darin gelöst sind.

In einer zweiten Verfahrensstufe werden die bei der Copolymerisation erhältlichen Produkte hydrolysiert. Hierfür kann man zur Herstellung von Copolymerisaten, deren Carboxylgruppen in der Säureform vorliegen, Wasser zusetzen und zur Vervollständigung der Hydrolyse der Anhydridgruppen des Copolymerisats das Reaktionsgemisch auf eine Temperatur bis zu 150° C, vorzugsweise 70 bis 100° C, erhitzen. Sofern die Hydrolyse des Copolymerisats bei Temperaturen durchgeführt wird, die oberhalb der Siedetemperaturen der Lösemittel-Wasser-Gemische liegen, führt man die Hydrolyse unter Druck durch. Der bei der Copolymerisation eingesetzte aromatische Kohlenwasserstoff kann dabei vor oder auch nach der Hydrolyse von der entstehenden wäßrigen Polymerlösung abdestilliert werden. Die Copolymerisate können jedoch auch aus dem bei der Polymerisation erhaltenen Reaktionsgemisch durch Zugabe eines Lösemittels, in dem sie nicht löslich sind, ausgefällt und anschließend hydrolysiert werden.

Falls gewünscht, kann die wäßrige Lösung der Copolymerisate auch mit einer Base behandelt werden, so daß die Carboxylgruppen der Copolymerisate dann teilweise oder vollständig in der Salzform vorliegen. Geeignete Basen sind beispielsweise Natronlauge, Kalilauge, Ammoniak oder Amine. Um die Salze der Copolymerisate herzustellen, geht man jedoch vorzugsweise so vor, daß man das bei der Copolymerisation erhaltene Reaktionsgemisch mit wäßrigen Lösungen einer Alkalimetallbase, Ammoniak oder eines Amins neutralisiert. Auch in diesen Fällen kann der aromatische Kohlenwasserstoff vor, während oder nach der Neutralisation abdestilliert und anschließend wieder verwendet werden. Außer Alkalimetallbasen verwendet man wäßrige Lösungen von Ammoniak oder Aminen, z.B. Triethylamin, Butylamin, Ethanolamin, Triethanolamin oder Morpholin. In den Fällen, in denen die Säureform der hydrolisierten Copolymerisate in Wasser nicht löslich ist, werden die Copolymerisate durch partielle oder vollständige Neutralisation mit einer Base in eine wasserlösliche Form überführt.

Der K-Wert der obenbeschriebenen Copolymerisate beträgt 7 bis 20 und liegt vorzugsweise in dem Bereich von 8,5 bis 15 (bestimmt als Natriumsalz in 5 %iger wäßriger Lösung bei 25° C und pH 7). Die Copolymerisate enthalten nach der Hydrolyse weniger als 1 Gew.-% monomerer Maleinsäure (polarographisch bestimmt). Die wäßrigen Lösungen der hydrolysierten Copolymerisate können daher ohne weitere Reinigung direkt als Wasserbehandlungsmittel verwendet werden, und Kesselsteinabscheidung bzw. Wasserhärteausscheidung in wasserführenden Systemen zu vermindern bzw. gänzlich zu unterbinden.

Die Copolymerisation kann in Gegenwart von Schutzkolloiden und Polymerisationsreglern durchgeführt werden. Geeignete Schutzkolloide, die letztlich zu klaren wäßrigen Copolymerisatlösungen führen, sind beispielsweise Polymerisate, die sowohl im organischen Lösemittel gut als auch in Wasser etwas löslich sind. Schutzkolloide, die diese Eigenschaften aufweisen, sind beispielsweise Polyvinylether, z.B. Polymerisate von $C_1$-bis $C_4$-Alkylvinylethern. Schutzkolloide dieser Art sind bekannt, sie haben beispielsweise K-Werte von 30 bis 80 (bestimmt nach Fikentscher in Cyclohexanon bei 25° C bei einer Polymerkonzentration von 1 %). Die Schutz kolloide werden - sofern sie bei der Copolymerisation eingesetzt werden - in Mengen von 0,2 bis 2 Gew.-%, bezogen auf die Summe der Monomeren (a), (b) und (c) verwendet.

Um das Molekulargewicht der Copolymerisate zu erniedrigen, setzt man bei der Polymerisation ggf. Regler ein. Hierbei handelt es sich z.B. um Verbindungen wie Merkaptoessigsäure, Merkaptopropionsäure, Dodecylmercaptan und Mercaptoalkanole, wie 2-Mercaptoethanol, Mercaptopropanole und Mercaptobutanole. Sofern die Regler zur Anwendung kommen, werden sie in Mengen von 0,1 bis 5 Gew.-%, bezogen auf die bei der Copolymerisation verwendet Monomeren, eingesetzt.

Die Wirkungsweise der Copolymerisate als sog. Belagsverhinderer besteht darin, die Bildung von Kristallen der Härtebilnersalze, wie Calciumcarbonat, Magnesiumoxid, Magnesiumcarbonat, Calcium-, Barium- oder Strontiumsulfat, Calciumphosphat (Apatit) und ähnliche im unterstöchiometrischen Dosierungsbereich zu verhindern oder die Bildung dieser Niederschläge so zu beeinflussen, daß keine harten und steinartigen Beläge entstehen, sondern leicht ausschwemmbare, im Wasser fein verteilte Ausscheidungen gebildet werden. Auf diese Weise werden die Oberflächen von z.B. Wärmeaustauschern, Rohren oder

Pumpenbauteilen von Belägen freigehalten und deren Korrosionsneigung vermindert. Insbesondere wird die Gefahr von Lochfraßkorrosion unter diesen Belägen verringert. Ferner wird das Aufwachsen von Microorganismen auf diesen Metalloberflächen erschwert. Durch den Einfluß der Belagsverhinderer kann die Lebensdauer von solchen Anlagen erhöht und Stillstandzeiten zur Reinigung von Anlagenteilen erheblich reduziert werden. Die hierzu benötigten Mengen von Belagsverhinderer betragen nur 0,1 bis 100 ppm, bezogen auf die jeweilige Wassermenge. Bei den wasserführenden Systemen handelt es sich z.B. um offene oder geschlossene Kühlkreisläufe, beispielsweise von Kraftwerken oder chemischen Anlagen, wie Reaktoren, Destillationsapparaturen und ähnlichen Bauteilen, bei denen Wärme abgeführt werden muß. Der Einsatz dieser Belagsverhinderer kann auch in Boilerwässern und Dampferzeugern, vorzugsweise im Bereich von Wassertemperaturen unterhalb 150 °C erfolgen. Eine bevorzugte Anwendung der erfindungsgemäß zu verwendeden Belagsverhinderer ist ferner die Entsalzung von Meer- und Brackwasser durch Destillation oder Membranverfahren, wie z.B. die umgekehrte Osmose oder Elektrodialyse. So wird z.B. beim sog. MSF-Destillationsverfahren zur Meerwasserentsalzung eingedicktes Meerwasser mit erhöhter Temperatur im Umlauf gefahren. Die Belagsverhinderer unterbinden dabei wirksam die Ausscheidung von Härtebildnern, wie z.B. Brucit und deren Anbacken an Anlagebauteile.

Bei Membranverfahren kann die Schädigung der Membranen durch auskristallisierende Härtebildner wirksam verhindert werden. Auf diese Weise ermöglichen diese Belagsverhinderer höhere Eindickungsfaktoren, verbesserte Ausbeute an Reinwasser und längere Lebensdauer der Membranen. Eine weitere Anwendung der Belagsverhinderer ist z.B. beim Eindampfen von Zuckersäften aus Rohr- oder Rübenzucker gegeben. Im Gegensatz zu oben beschriebenen Anwendungen werden hier dem Zuckerdünnsaft zur Reinigung z.B. Calciumhydroxid, Kohlendioxid, Schwefeldioxid oder gegebenfalls Phosphorsäure zugesetzt. Nach Filtration im Zuckersaft verbleibende schwerlösliche Calciumsalze, wie z.B. Calciumcarbonat, -sulfat oder -phosphat, fallen dann während des Eindampfprozesses aus und können als steinharte Beläge auf Wärmetauscheroberflächen auftreten. Dies gilt ebenso auch für Zuckerbegleitstoffe, wie Kieselsäure oder Calciumsalze organischer Säuren, wie z.B. Oxalsäure.

Ähnliches gilt für Verfahren, die sich an die Zuckergewinnung anschließen, so z.B. die Alkoholgewinnung aus Rückständen der Zuckerproduktion.

Die erfindungsgemäß als Belagsverhinderer einsetzbaren Copolymerisate sind in der Lage, die obengenannten Belagsbildungen weitgehend zu unterbinden, so daß Stillstandszeiten der Anlagen zur Reinigung, z.B. durch Auskochen, wesentlich verringert werden können. Ein wesentlicher Gesichtspunkt hierbei ist ferner die beträchtliche Energieeinsparung durch Vermeidung der genannten wärmeisolierenden Beläge.

Die in den beschriebenen Anwendungen nötigen Mengen des Belagsverhinderers sind unterschiedlich, betragen jedoch zwischen 0,1 und 100 ppm, bezogen auf eingesetztes Kühlwasser, Boilerwasser, Prozeßwasser oder z.B. Zuckersaft.

Die hydrolysierten Copolymerisate der Maleinsäure können außerdem als Inkrustations- und Vergrauungsinhibitoren in einer Menge von 0,5 bis 10 Gew.-% in Waschmittelformulierungen eingearbeitet werden. Die wasserlöslichen Copolymerisate kommen auch als Wasserhärtestabilisatoren in Reinigungsmittelformulierungen in Betracht. Sie eignen sich außerdem in einer Menge von 0,1 bis 5 Gew.-% als Dispergiermittel für Pigmente, z.B. zur Herstellung von wäßrigen hochkonzentrierten Anschlämmungen von Clay oder Kreide für die Bereitung von Papierstreichmassen.

Die in den Beispielen angegebenen Teile sind Gewichtsteile. Die Angaben in Prozent beziehen sich auf das Gewicht der Stoffe. Die K-Werte der hydrolysierten Copolymerisate wurden nach H. Fikentscher, Cellulose-Chemie, Band 13, 48-64 und 71-74 (1932) in wäßriger Lösung bei einem pH-Wert von 7, einer Temperatur von 25C und einer Polymerkonzen tration des Natriumsalzes des Copolymerisats von 5 Gew.-% bestimmt.

Beispiel 1

In einem 2 l fassenden Glasreaktor, der mit Rührer, Thermometer, Stickstoffeinleitung, Kühler, Zulaufgefäßen und einer Vorrichtung für das Einleiten von Wasserdampf versehen ist, wird eine Lösung von 380 g Maleinsäureanhydrid in 600 g trockenem o-Xylol vorgelegt und zum Sieden unter Rückfluß erhitzt. Innerhalb von 3 Stunden nach Beginn des Rückflußsiedens führt man dem Reaktor einen Zulauf 1 zu, der aus einer Lösung von 8 g Hydroxipropylacrylat in 8 g o-Xylol besteht und innerhalb von 5 Stunden nach Beginn des Rückflußsiedens einen Zulauf 2, der aus einer Lösung von 86 g tert.-Butyl-per-2-ethylhexanoat in 100 g o-Xylol besteht. Die Polymerisation wird unter guter Durchmischung beim Rückflußsieden der Reaktionspartner durchgeführt. Nach Abschluß der Zugabe des Zulaufs 2 wird das Reaktionsgemisch noch eine Stunde zum Sieden erhitzt, danach auf 97 °C abgekühlt und durch Zugabe von 300 g Wasser hydrolysiert. Man leitet dann Wasserdampf in das Reaktionsgemisch ein und entfernt das nicht umgesetzte o-Xylol azeotrop

aus dem Reaktionsgemisch. Man erhält eine klare, bräunlich gefärbte wäßrige Lösung mit einem Feststoffgehalt von 75,2 %. Das so erhaltene Copolymerisat aus Maleinsäure und Hydroxipropylacrylat hat in Form des Natriumsalzes unter den obenangegebenen Bedingungen einen K-Wert von 9,5. Der Gehalt des Copolymerisats an nichtpolymerisierter Maleinsäure beträgt 0,9 %. Die Ausbeute an Copolymerisat, bezogen auf die bei der Copolymerisation eingesetzten Monomeren, beträgt 123 %.

Beispiel 2

In der im Beispiel 1 beschriebenen Apparatur legt man eine Lösung von 400 g Maleinsäureanhydrid in 580 g o-Xylol vor, erhitzt sie zum Sieden unter Rückfluß, fügt innerhalb von 3 Stunden nach Beginn des Rückflußsiedens einen Zulauf 1 hinzu, der aus einer Lösung von 20 g Hydroxipropylacrylat in 20 g o-Xylol besteht und innerhalb von 5 Stunden einen Zulauf 2 aus einer Lösung von 60 g tert.-Butyl-per-2-ethylhexanoat in 100 g o-Xylol. Die Copolymerisation wird unter guter Durchmischung beim Rückflußsieden der Reaktionsteilnehmer durchgeführt. Nach Beendigung der Zugabe des Zulaufs 2 wird das Reaktionsgemisch noch eine Stunde zum Rückflußsieden erhitzt. Es trennt sich, sobald man den Rührer abstellt, in 2 Phasen. Nach dem Abkühlen des Reaktionsgemisches auf eine Temperatur von etwa 95° C fügt man 300 g Wasser zu, um die Anhydridgruppen des Copolymerisats zu hydrolysieren und leitet dann Wasserdampf in das Reaktionsgemisch und entfernt dabei das nichtumgesetzte o-Xylol azeotrop. Man erhält eine fast klare, bräunlich gefärbte Lösung mit einem Feststoffgehalt von 57,2 %. Der K-Wert des Copolymerisats beträgt 10,4, die Ausbeute an Copolymerisat 129 %, bezogen auf die eingesetzten Monomeren. Der Restmonomerengehalt des Copolymerisats liegt bei 0,23 %.

Beispiel 3

In der im Beispiel 1 beschriebenen Polymerisationsapparatur legt man eine Lösung von 380 g Maleinsäureanhydrid in 600 g o-Xylol vor, erhitzt sie zum Sieden unter Rückfluß und dosiert nach Beginn des Rückflußsiedens innerhalb von 3 Stunden 20 g Hydroxiethylacrylat und als Zulauf 2 innerhalb von 5 Stunden nach Beginn des Siedens eine Lösung von 60 g tert.-Butyl-per-2-ethylhexanoat in 100 g o-Xylol zu. Nach Beendigung der Initiatorzugabe wird das Reaktionsgemisch zur Erniedrigung des Restmonomerengehalts noch 1 Stunde zum Sieden unter Rückfluß erhitzt. Man läßt es auf 98° C abkühlen, gibt zur Hydrolyse der Anhydridgruppen des Copolymerisats 300 g Wasser zu und führt anschließend einer Wasserdampfdestillation durch, bei der das nichtumgesetzte o-Xylol azeotrop mit Wasser entfernt wird. Man erhält eine fast klare braune Lösung mit einem Feststoffgehalt von 56,9 %. Das so erhaltene Copolymerisat hat einen K-Wert von 9,6 und einen Gehalt an Maleinsäure von 0,16 %. Die Ausbeute an Copolymerisat beträgt 126 %, bezogen auf Maleinsäure und Hydroxiethylacrylat.

Beispiel 4

Beispiel 1 wird mit der Ausnahme wiederholt, daß man als Zulauf 1 32 g Butandiolmonoacrylat einsetzt. Man erhält eine fast klare braune Lösung, die einen Feststoffgehalt von 50,9 % hat. Das Copolymerisat hat einen K-Wert von 10,3 und einen Gehalt an restlicher Maleinsäure von 0,06 %. Die Ausbeute an Copolymerisat beträgt, bezogen auf Maleinsäure und Butandiolmonoacrylat 124 %.

Beispiel 5

In der im Beispiel 1 beschriebenen Vorrichtung wird eine Lösung von 360 g Maleinsäureanhydrid in 600 g o-Xylol vorgelegt und zum Sieden unter Rückfluß erhitzt. Sobald das Rückflußsieden beginnt, fügt man innerhalb von 4 Stunden einen Zulauf 1 zu, der aus 40 g Vinylacetat besteht und einen Zulauf 2 aus 60 g tert.-Butyl-per-2-ethylhexanoat in 100 g o-Xylol. Nach Beendigung der Initiatorzugabe wird das Reaktionsgemisch noch 1 Stunde zum Rückflußsieden erhitzt, um die Polymerisation zu vervollständigen. Die Reaktionslösung wird dann auf 98° C abgekühlt, mit 300 g Wasser versetzt und anschließend Wasserdampf durch das Reaktionsgemisch geleitet. Nach dem azeotropen Entfernen des o-Xylols erhält man eine klare braune Lösung mit einem Feststoffgehalt von 63,3 %. Das Copolymerisat hat einen K-Wert von 9,6 und enthält 0,01 % nichtpolymerisierte Maleinsäure. Die Ausbeute an Copolymerisat beträgt 120 %, bezogen auf Maleinsäure und Vinylacetat.

Beispiel 6

Beispiel 5 wird mit der Ausnahme wiederholt, daß man als Zulauf 1 40 g Vinylpropionat verwendet. Man erhält eine fast klare braune wäßrige Lösung mit einem Feststoffgehalt von 63,6 %. Das Copolymerisat hat einen K-Wert von 9,6 und enthält 0,36 % monomere Maleinsäure. Die Ausbeute an Copolymerisat beträgt 121 %, bezogen auf Maleinsäure und Vinylpropionat.

Beispiel 7

In der im Beispiel 1 beschriebenen Apparatur wird eine Lösung von 360 g Maleinsäureanhydrid, 40 g Fumarsäuredimethylester und 600 g o-Xylol vorgelegt und zum Sieden unter Rückfluß erhitzt. Nach Beginn des Rückflußsiedens fügt man kontinuierlich eine Lösung von 60 g tert.-Butyl-per-2-ethylhexanoat in 100 g o-Xylol zu. Nach Beendigung der Initiatorzugabe wird das Reaktionsgemisch noch eine Stunde zum Sieden erhitzt und anschließend auf 97 °C abgekühlt sowie mit 300 g Wasser versetzt. Dann führt man eine Wasserdampfdestillation durch, um das nichtumgesetzte o-Xylol zu entfernen. Man erhält eine fast klare braune Lösung mit einem Feststoffgehalt von 61,5 %. Das Copolymerisat hat einen K-Wert von 9,5 und enthält 0,35 % monomerer Maleinsäure. Die Ausbeute an Copolymerisat beträgt 121 %, bezogen auf Maleinsäure und Fumarsäuredimethylester.

Beispiel 8

Das Beispiel 7 wird mit der Ausnahme wiederholt, daß man in der Polymerisationsapparatur eine Lösung von 360 g Maleinsäureanhydrid, 40 g Maleinsäure-di-tert.-butylester in 600 g o-Xylol vorlegt. Man erhält eine klare braune Lösung mit einem Feststoffgehalt von 60,1 %. Das Copolymerisat hat einen K-Wert von 9,4 und enthält 0,6 % Maleinsäure. Die Ausbeute an Copolymerisat beträgt 117 %, bezogen auf Maleinsäure und Maleinsäure-di-tert.-butylester.

Beispiel 9

Das Beispiel 7 wird mit der Ausnahme wiederholt, daß man die Zusammensetzung der Vorlage dahingehend ändert, daß sie aus 360 g Maleinsäureanhydrid und 40 g Acrylamidomethylpropansulfonsäure in 600 g o-Xylol besteht. Man erhält eine wäßrige Lösung mit einem Feststoffgehalt von 60,8 %. Das Copolymerisat hat einen K-Wert von 9,5 und enthält 0,98 % Maleinsäure. Die Ausbeute beträgt 115 %, bezogen auf Maleinsäure und das Comonomer.

Beispiel 10

Beispiel 7 wird mit der Ausnahme wiederholt, daß man in der Polymerisationsapparatur eine Lösung von 360 g Maleinsäureanhydrid und 40 g Methacrylsäure in 600 g o-Xylol vorlegt. Man erhält eine klare bräunliche Lösung mit einem Feststoffgehalt von 65,7 %. Das Copolymerisat hat einen K-Wert 13,5 und enthält 0,6 % Maleinsäure. Die Ausbeute beträgt 122 %, bezogen auf Maleinsäure und Methacrylsäure.

Beispiel 11

In der im Beispiel 1 beschriebenen Polymerisationsapparatur wird eine Lösung von 360 g Maleinsäureanhydrid in 832 g eines technischen Xylol-Gemisches vorgelegt und unter Rühren auf 100 °C erwärmt. Sobald diese Temperatur erreicht ist, dosiert man innerhalb von 3 Stunden kontinuierlich 40 g Acrylsäure in 100 g eines technischen Xylolgemisches und innerhalb von 5 Stunden eine Lösung von 30 g tert.-Butyl-per-2-ethylhexanoat in 100 g eines technischen Xylolgemisches zu. Die Polymerisationstemperatur wird auf 100 °C gehalten. Nach Beendigung der Initiatorzugabe wird das Reaktionsgemisch noch 1 Stunde zum Rückflußsieden erhitzt. Man erhält eine klare gelbe Lösung, die einen Feststoffgehalt von 56,3 % hat. Das Copolymerisat hat einen K-Wert von 9,5 und enthält 0,96 % Maleinsäure. Die Ausbeute an Copolymerisat beträgt 156 %, bezogen auf Maleinsäure und Acrylsäure.

Beispiel 12

In der in Beispiel 1 beschriebenen Polymerisationsapparatur legt man eine Lösung von 360 g Maleinsäureanhydrid und 40 g Vinylphosphonsäure in 932 g eines technischen Xylolgemisches vor und erhitzt es auf eine Temperatur von 100 °C. Sobald diese Temperatur erreicht ist, beginnt man mit der Initiatorzugabe, wobei das Reaktionsgemisch ständig gerührt wird. Der Initiator besteht aus einer Lösung

von 30 g tert.-Butyl-per-2-ethylhexanoat in 100 g eines technischen Xylolgemisches. Die Initiatorzugabe erfolgt kontinuierlich innerhalb von 5 Stunden. Danach wird das Reaktionsgemisch noch 1 Stunde zum Sieden unter Rückfluß erhitzt, dann auf eine Temperatur von 95 °C abgekühlt mit 300 g Wasser versetzt und der Wasserdampfdestillation unterworfen. Man erhält eine klare gelbe Lösung mit einem Feststoffgehalt von 50,5 %. Das Copolymerisat hat einen K-Wert von 9,3 und enthält 0,98 % Maleinsäure. Die Ausbeute beträgt 153 %, bezogen auf Maleinsäure und Vinylphosphonsäure.

Beispiel 13

In der im Beispiel 1 angegebenen Polymerisationsapparatur legt man eine Lösung von 368 g Maleinsäureanhydrid in 570 g o-Xylol vor, erhitzt die Lösung zum Sieden und gibt dann kontinuierlich innerhalb von 3 Stunden einen Zulauf 1 zu, der aus einer Mischung von 20 g Hydroxipropylacrylat und 12 g Butandioldiacrylat besteht und gleichzeitig damit einen Zulauf 2 innerhalb von 5 Stunden, der aus einer Lösung von 60 g tert.-Butyl-per-2-ethylhexanoat in 100 g o-Xylol besteht. Die Polymerisation wird unter Rühren und Rückflußsieden durchgeführt. Nach Beendigung der Initiatorzugabe wird die Reaktionsmischung noch 1 Stunde zum Sieden unter Rückfluß erhitzt, auf 98C abgekühlt, mit 500 g Wasser versetzt und einer Wasserdampfdestillation unterworfen. Man erhält eine klare bräunliche wäßrige Lösung, die einen Feststoffgehalt von 50,6 % aufweist. Das erhaltene geringfügig vernetzte Copolymerisat hatte einen K-Wert von 12,1 und enthält 0,17 % Maleinsäure. Die Ausbeute an Copolymerisat beträgt 123 %, bezogen auf die bei der Copolymerisation eingesetzten Monomeren.

Vergleichsbeispiel 1

(Entsprechend Beispiel 8 der US-PS 3 755 264)

In einem 2 l fassenden Glasreaktor, der mit Rührer, Zulaufeinrichtungen, Rückflußkühler sowie einer Vorrichtung für das Einleiten von Wasserdampf versehen war, wurde eine Lösung von 300 g Maleinsäureanhydrid in 330 g Toluol vorgelegt und zum Sieden unter Rückfluß erhitzt. Nach dem Beginn des Siedens dosierte man zur Vorlage innerhalb von 4 Stunden kontinuierlich einen Zulauf, der aus einer Lösung von 30 g Vinylacetat und 32 g Benzoylperoxid (75%ig) in 210 g Toluol bestand. Nach Beendigung des Zulaufs wurde das Reaktionsgemisch noch eine halbe Stunde zum Sieden erhitzt, dann auf 97 °C abgekühlt, mit 200 g Wasser versetzt und durch Einleiten von Wasserdampf das Toluol abdestilliert. Nach Abschluß der Polymerisation trennte sich das Reaktionsgemisch in 2 Phasen. Die obere Phase war trüb und dunkelbraun gefärbt, während die untere Phase schwarz aussah und eine ölige Konsistenz hatte. Die nach der Wasserdampfdestillation erhaltene wäßrige Lösung war rotbraun gefärbt und hatte einen Feststoffgehalt von 55,9 %. Das Maleinsäurecopolymerisat enthielt 46,1 % monomere Maleinsäure. Wegen dieses hohen Maleinsäuregehalts wurde keine anwendungstechnische Prüfung durchgeführt.

Vergleichsbeispiel 2

(gemäß DE-OS 26 43 422, Seite 21, Copolymerisat E)

Nähere Angaben zur Herstellung des Copolymerisates fehlen in der DE-OS. Die Copolymerisation wurde daher in Anlehnung an die Beispiele der vorliegenden Erfindung durchgeführt:
Man verwendete die im Beispiel 1 beschriebenen Polymerisationsapparatur, legte darin eine Lösung von 101,4 g Maleinsäureanhydrid in 400 g o-Xylol vor, erhitzte die Lösung zum Sieden und fügte dann einen Zulauf 1, der aus einer Lösung von 120 g Hydroxiethylmethacrylat und 120 g Acrylsäure in 100 g o-Xylol bestand, kontinuierlich innerhalb von 3 Stunden und einen Zulauf 2 aus einer Lösung von 60 g tert.-Butylperethylhexanoat in 100 g o-Xylol kontinuierlich innerhalb von 5 Stunden zu, wobei man die Polymerisation beim Siedepunkt des o-Xylols durchführte. Sofort nach Zugabe der Comonomeren bildete sich ein Wandbelag. Nach 1 1/2 Stunden bestand der Ansatz aus einem dicken Polymerisatbrei. Nach Beendigung der Initiatorzugabe wurde das Reaktionsgemisch noch 1 Stunde zur Nachpolymerisation zum Sieden erhitzt, dann auf 98 °C abgekühlt, mit 250 g Wasser versetzt und durch Einleiten von Wasserdampf von o-Xylol befreit. Während der Destillation fügte man noch 400 g Wasser zu. Man erhielt eine breiige Aufschlämmung eines wasserunlöslichen Copolymerisats. Auf Zugabe von 50 %iger wäßriger Natronlauge bis zu einem pH-Wert von 8 zum Reaktionsgemisch, konnte nur eine geringe Menge des Copolymerisates in Lösung gebracht werden. Der Hauptanteil des Copolymerisates blieb ungelöst. Ein derartiges Produkt ist für die Wasserbehandlung nicht brauchbar. Ein vergleichbares Ergebnis erhält man, wenn man als Polymerisationsinitiator 60 g tert.-Butylperoxid zur Herstellung des Copolymerisats E einsetzt.

Anwendungstechnische Beispiele

Testmethoden

$CaCO_3$-Inhibierung dynamisch

Dieser Test simuliert die Belagsbildung von Calciumcarbonat in einem Kühlkreislauf. Bei dieser Untersuchungsmethode wird Testwasser mit 30 °d Ca-Härte, 10 °d Mg-Härte und 56 °d Carbonathärte während 2 h durch eine auf 75 °C erhitzte Glasspirale gepumpt (Flußrate 0,5 1/h). Der in der Spirale gebildete Belag wird herausgelöst und Ca + Mg komplexometrisch bestimmt. Die Inhibitorwirkung errechnet sich aus der Belagsmenge im Blindversuch und bei Anwesenheit der entsprechenden Mengen des Belagsverhinderers.

Ca-Phosphat-Dispergierung

Mit diesem Test kann die dispergierte Wirkung auf ausgefallene Niederschläge ermittelt werden. Hierbei wird Testwasser mit 500 ppm Calciumphosphat-Niederschlag bei pH 8,5-9 1 h bei 100 °C gehalten und anschließend in einen Standzylinder überführt. Nach 1 h wird der Ca-Gehalt in der Mitte des Standzylinders komplexometrisch ermittelt. Die Dispergierwirkung errechnet sich aus der Menge von dispergiertem Calciumphosphat im Blindversuch und bei Anwesenheit des Dispergiermittels.

Screening-Test Meerwasserentsalzung

Synthetisches Meerwasser (200 ml) nach DIN 50 900 (1960), mit einer Anfangssalzkonzentration von 6,15 % wird bei 95 °C eingedampft, bis eine Trübung sichtbar wird. Das erhaltene Volumen ist ein Maß für die Wirksamkeit des Belagsverhinderers.

Die gemäß den Beispielen 1 bis 13 hergestellten Copolymerisate wurden nach den oben beschriebenen Untersuchungsmethoden getestet. Dabei wurden die in der folgenden Tabelle angegebenen Werte erhalten:

Tabelle:

| ppm 100%iges Copolymerisat: | Ca-carbonat Inhibierung (%) | Ca-Phosphat Dispergierung (%) | Meerwassereindampfung (Mg-oxid Inhibierung) (ml Restvolumen) | | |
|---|---|---|---|---|---|
| | 2 | 30 45 60 | 0,25 | 0,5 | 1,0 |
| Beispiel Nr. | | | | | |
| 1 | 81,1 | 32,5/65,3/78,0 | - | 116 | - |
| 2 | 76,1 | 88,5/98,4/99,7 | 135 | 90 | 65 |
| 3 | 78,3 | 35,6/86,5/98,2 | 142 | 112 | 73 |
| 4 | 74,4 | 44,8/73,6/92,6 | 138 | 116 | 72 |
| 5 | 76,7 | 42,7/78,2/89,8 | - | 118 | - |
| 6 | 76,1 | 65,3/88,9/91,5 | 142 | 110 | 76 |
| 7 | 78,9 | 22,2/72,8/91,7 | - | 114 | - |
| 8 | 80,0 | 67,7/83,1/88,8 | 141 | 115 | 78 |
| 9 | 78,9 | 25,6/62,8/81,7 | - | 114 | - |
| 10 | 75,5 | 44,6/72,3/90,2 | 132 | 112 | 69 |
| 11 | 69,5 | 52,0/70,4/82,5 | 144 | 119 | 66 |
| 12 | 69,0 | 23,0/68,9/86,6 | 145 | 122 | 79 |
| 13 | 81,2 | 72,0/87,8/95,8 | 148 | 104 | 76 |
| Vergleichsbeispiel Polymer nach Beispiel 1 der US-PS 3 810 834 | 63,2 | 5,6/55,8/69,6 | 148 | 131 | 84 |

## Patentansprüche

1. Verfahren zur Herstellung von wasserlöslichen Copolymerisaten der Maleinsäure durch Copolymerisieren von

   (a) 99 bis 80 Gew.-% Maleinsäureanhydrid und
   (b) 1 bis 20 Gew.-% eines mit Maleinsäureanhydrid copolymeriserbaren monoethylenisch ungesättigten Monomeren

   wobei die Summe der Prozentangaben (a) und (b) immer 100 beträgt in einem aromatischen

Kohlenwasserstoff bei Temperaturen von 60 bis 200 °C in Gegenwart von 1 bis 20 Gew.-%, bezogen auf die Monomeren (a) und (b), an Polymerisationsinitiatoren und Hydrolysieren der Anhydridgruppen der Copolymerisate, dadurch gekennzeichnet, daß man als Polymerisationsinitiatoren tert.-Butyl-perbenzoat, 2,5-Dimethylhexan-2,5-diperbenzoat oder Peroxiester einsetzt, die sich von gesättigten oder monoethylenisch ungesättigten Carbonsäuren ableiten.

**2.** Verfahren nach Anspruch 1, dadurch gekennzeichnet, daß man die Copolymerisation der Monomeren (a) und (b) in Benzol, Toluol, Xylol, Ethylbenzol, Diethylbenzol, Isopropylbenzol, Diisopropylbenzol oder deren Mischungen bei Temperaturen von 80 bis 150 °C in Gegenwart von 5 bis 16 Gew.-%, bezogen auf die Monomeren (a) und (b), an Peroxiestern durchführt, die sich von gesättigten C4- bis C10-Carbonsäuren ableiten.

**3.** Verfahren nach den Ansprüchen 1 und 2, dadurch gekennzeichnet, daß man als Monomere der Gruppe (b) Hydroxylalkylester aus ethylenisch ungesättigten $C_3$- bis $C_5$-Carbonsäuren und mindestens zweiwertigen, gesättigten $C_2$- bis $C_6$-Alkoholen oder Polyalkylenglykolen, Vinylester von gesättigten $C_1$- bis $C_4$-Carbonsäuren, ethylenisch ungesättigte $C_3$-bis $C_5$-Carbonsäuren, Acrylamidomethylpropansulfonsäure, Vinylphosphonsäure, Vinylsulfonsäure, Ester aus ethylenisch ungesättigten $C_3$- bis $C_5$-Carbonsäuren und einwertigen $C_1$- bis $C_{18}$-Alkoholen sowie Di-$C_1$-bis $C_3$-alkylamino-$C_2$- bis $C_6$-alkylacrylate und Di-$C_1$- bis $C_3$-alkylamino-$C_2$- bis $C_6$-alkylmethacrylate allein oder in Form von Mischungen einsetzt.

**4.** Verfahren nach den Ansprüchen 1 bis 3, dadurch gekennzeichnet, daß man Monomermischungen aus

(a) 98 bis 90 Gew.-% Maleinsäureanhydrid und
(b) 2 bis 10 Gew.-% Hydroxialkylester aus ethylenisch ungesättigten Mono- und Dicarbonsäuren mit 3 bis 5 C-Atomen und zweiwertigen $C_2$- bis $C_6$-Alkoholen, Vinylacetat, Vinylpropionat, Acrylsäure, Methacrylsäure, Vinylphosphonsäure und/oder Acrylamidomethylpropansulfonsäure

copolymerisiert.

**5.** Verfahren zur Herstellung von wasserlöslichen Copolymerisaten der Maleinsäure durch Copolymerisieren von

(a) 99 bis 80 Gew.-% Maleinsäureanhydrid und
(b) 1 bis 20 Gew.-% eines mit Maleinsäureanhydrid copolymerisierbaren monoethylenisch ungesättigten Monomeren in Gegenwart von
(c) bis zu 10 Gew.-% eines mindestens zwei ethylenisch umgesättigte Doppelbindungen enthaltenden vernetzers

wobei die Summe der Prozentangaben (a), und (b) und (c) immer 100 beträgt, in einem aromatischen Kohlenwasserstoff bei Temperaturen von 60 bis 200 ° C in Gegenwart von 1 bis 20 Gew.-%, bezogen auf die Monomeren (a) und (b), an Polymerisationsinitiatoren und Hydrolysieren der Anhydridgruppen der Copolymerisate, dadurch gekennzeichnet, daß man als Polymerisationsinitiatoren tert.-Butyl-perbenzoat, 2,5-Dimethylhexan-2,5-diperbenzoat oder Peroxiester einsetzt, die sich von gesättigten oder monoethylenisch ungesättigten Carbonsäuren ableiten.

**6.** Verfahren nach Anspruch 5, dadurch gekennzeichnet, daß man die Vernetzer in einer Menge von 0,2 bis 5 Gew.-%, bezogen auf die Monomeren (a), (b) und (c) einsetzt.

**7.** Verfahren nach den Ansprüchen 5 und 6, dadurch gekennzeichnet, daß man als Vernetzer Diacrylate oder Dimethacrylate von Polyethylenglykolen oder Polypropylenglykolen mit Molekulargewichten von jeweils 200 bis 9000, Vinylester von ethylenisch ungesättigten $C_3$- bis $C_6$-Carbonsäuren, Vinylester von mindestens 2 Carboxylgruppen enthaltenden gesättigten Carbonsäuren, Di- und Polyvinylether von mindestens 2-wertigen Alkoholen, Allylester ethylenisch ungesättigter Carbonsäuren, Allylether von mehrwertigen Alkoholen, Methylenbisacrylamid, Methylenbismethacrylamid, Divinylethylenharnstoff, Divinylpropylenharnstoff, Divinylbenzol, Divinyldioxan oder deren Mischungen einsetzt.

**8.** Verfahren nach den Ansprüchen 1 bis 7, dadurch gekennzeichnet, daß man als Polymerisationsinitiatoren tert.-Butyl-per-2-ethylhexanoat, tert.-Butylpermaleiniat, tert.-Butylperpivalat, tert.-Butylperbenzoat oder deren Mischungen einsetzt.

9. Verwendung von wasserlöslichen Copolymerisaten, die erhältlich sind durch Copolymerisieren von
   (a) 99 bis 80 Gew.-% Maleinsäureanhydrid,
   (b) 1 bis 20 Gew.-% eines mit Maleinsäureanhydrid copolymerisierbaren monoethylenisch ungesättigten Monomeren und gegebenenfalls
   (c) bis zu 10 Gew.-% eines mindestens zwei ethylenisch ungesättigte Doppelbindungen enthaltenden Vernetzers, wobei die Summe der Prozentangaben (a), (b) und (c) immer 100 beträgt,

   in einem aromatischen Kohlenwasserstoff bei Temperaturen von 60 bis 200 °C in Gegenwart von 1 bis 20 Gew.-%, bezogen auf die eingesetzten Monomeren (a), (b) und (c), Peroxiestern, die sich von gesättigten oder monoethylenisch ungesättigen Carbonsäuren ableiten, und Hydrolysieren der Anhydridgruppen der Copolymerisate, als Wasser behandlungsmittel zur Verminderung der Kesselsteinabscheidung und Wasserhärteausscheidung in wasserführenden Systemen.

## Claims

1. A process for preparing a water-soluble copolymer of maleic acid by copolymerising
   (a) from 99 to 80% by weight of maleic anhydride and
   (b) from 1 to 20% by weight of a monoethylenically unsaturated monomer copolymerizable therewith,

   the percentages (a) and (b) always adding up to 100, at from 60 to 200 °C in an aromatic hydrocarbon in the presence of from 1 to 20% by weight, based on the monomers (a) and (b), of a polymerization initiator, and hydrolyzing the anhydride groups of the copolymer, which comprises using as the polymerization initiator a tert-butyl perbensoate, 2,5-dimethylhexane-2,5-diol diperbenzoate or peroxyester which is derived from a saturated or monoethylenically unsaturated carboxylic acid.

2. A process as claimed in claim 1, wherein the copolymerization of monomers (a) and (b) is carried out in benzene, toluene, xylene, ethylbenzene, diethylbenzene, isopropylbenzene, diisopropylbenzene or a mixture thereof at from 80 to 150 °C in the presence of from 5 to 16% by weight, based on the monomers (a) and (b), of a peroxyester derived from a saturated $C_4$-$C_{10}$-carboxylic acid.

3. A process as claimed in claim 1 or 2, wherein the monomer of group (b) comprises a hydroxyalkyl ester of an ethylenically unsaturated $C_3$-$C_5$-carboxylic acid and a not less than dihydric saturated $C_2$-$C_6$-alcohol or polyalkylene glycol, a vinyl ester of a saturated $C_1$-$C_4$-carboxylic acid, an ethylenically unsaturated $C_3$-$C_5$-carboxylic acid, acrylamidomethylpropanesulfonic acid, vinylphosphonic acid, vinylsulfonic acid, an ester of an ethylenically unsaturated $C_3$-$C_5$-carboxylic acid and a monohydric $C_1$-$C_{18}$-alcohol, or a di-$C_1$-$C_3$-alkylamino-$C_2$-$C_6$-alkyl acrylate or di-$C_1$-$C_3$-alkylamino-$C_2$-$C_6$-alkyl methacrylate, alone or in the form of a mixture.

4. A process as claimed in claim 1 or 2 or 3, wherein a monomer mixture comprising
   (a) from 98 to 90% by weight of maleic anhydride and
   (b) from 2 to 10% by weight of a hydroxyalkyl ester of an ethylenically unsaturated mono- or dicarboxylic acid of 3 to 5 carbon atoms and a dihydric $C_2$-$C_6$-alcohol, vinyl acetate, vinyl propionate, acrylic acid, methacrylic acid, vinylphosphonic acid and/or acrylamidomethylpropanesulfonic acid

   is copolymerized.

5. A process as claimed in claim 4, wherein the crosslinker is used in an amount of from 0.2 to 5% by weight, based on the monomers (a), (b) and (c).

6. A process as claimed in claim 4 or 5, wherein the crosslinker used is a diacrylate or dimethacrylate of a polyethylene glycol or polypropylene glycol each from 200 to 9,000 in molecular weight, a vinyl ester of an ethylenically unsaturated $C_3$-$C_6$-carboxylic acid, a vinyl ester of a saturated carboxylic acid containing not less than 2 carboxyl groups, a divinyl or polyvinyl ether of a not less than dihydric alcohol, an allyl ester of an ethylenically unsaturated carboxylic acid, an allyl ether of a polyhydric alcohol, methylenebisacrylamide, methylenebismethacrylamide, divinylethyleneurea, divinylpropyleneurea, divinylbenzene, divinyldioxane or a mixture thereof.

7. A process as claimed in claim 1 or 2 or 3 or 4 or 5 or 6, wherein the polymerization initiator used is

tert-butyl per-2-ethylhexanoate, tert-butyl permaleate, tert-butyl perpivalate, tert-butyl perbenzoate or a mixture thereof.

**8.** The use of a water-soluble copolymer obtainable by copolymerizing
(a) from 99 to 80% by weight of maleic anhydride,
(b) from 1 to 20% by weight of a monoethylenically unsaturated monomer copolymerizable therewith and, facultatively,
(c) up to 10% by weight of a crosslinker containing not less than two ethylenically unsaturated double bonds, the percentages (a), (b) and (c) always adding up to 100,
at from 60 to 200 °C in an aromatic hydrocarbon in the presence of from 1 to 20% by weight, based on the monomers (a), (b) and (c) used, of a peroxyester derived from a saturated or monoethylenically unsaturated carboxylic acid, and hydrolyzing the anhydride groups of the copolymer, as a water treatment agent for reducing scale and water hardness deposits in water-conducting systems.

## Revendications

**1.** Procédé de préparation de copolymères de l'acide maléique, solubles dans l'eau par la copolyméisation de

(a) 99 à 80% en poids d'anhydride maléique et
(b) 1 à 20% en poids d'un monomère à insaturation monoéthylénique, copolymérisable avec l'anhydride maléique,
où la somme des pourcentages (a) et (b) est toujours égale à 100,
dans un hydrocarbure aromatique, à des températures de 60 à 200 °C, en présence de 1 à 20% en poids, par rapport aux monomères (a) et (b), d'amorceurs de polymérisation et l'hydrolyse des radicaux anhydride des copolymères, caractérisé en ce que l'on utilise, à titre d'amorceurs de polymérisation, le perbenzoate de tert-butyle, le 2,5-diperbenzoate de 2,5-diméthylhexane, ou des peroxyesters, qui dérivent d'acides carboxyliques saturés ou à insaturation monoéthylénique.

**2.** Procédé suivant la revendication 1, caractérisé en ce que l'on réalise la copolymérisation des monomères (a) et (b) dans le benzène, le toluène, le xylène, l'éthylbenzène, le diéthylbenzène, l'isopropylbenzène, le diisopropylbensène, ou leurs mélanges, à des températures de 80 à 150 °C, en présence de 5 à 16% en poids, par rapport aux monomères (a) et (b), de peroxyesters, qui dérivent d'acides carboxyliques saturés en $C_4$ à $C_{10}$.

**3.** Procédé suivant les revendications 1 et 2, caractérisé en ce qu'à titre de monomères du groupe (b), on utilise des esters hydroxyalkyliques d'acides carboxyliques à insaturation éthylénique en $C_3$ à $C_5$ et de polyalkylèneglycols ou d'alcools saturés, dihydroxylés, en $C_2$ à $C_6$, des esters vinyliques d'acides carboxyliques saturés en $C_1$ à $C_4$, des acides carboxyliques à insaturation éthylénique en $C_3$ à $C_5$, l'acide acrylamidométhylpropanesulfonique, l'acide vinylphosphonique, des esters d'acides carboxyliques à insaturation éthylénique en $C_3$ à $C_5$ et d'alcools monohydroxylés en $C_1$ à $C_{18}$, comme aussi des acrylates de dialkylamino($C_1$ à $C_3$)-alkyle($C_2$-$C_6$) et des méthacrylates de dialkylamino($C_1$-$C_3$)-alkyle($C_2$-$C_6$), seuls ou sous la forme de mélanges.

**4.** Procédé suivant les revendications 1 à 3, caractérisé en ce que l'on copolymérise des mélanges de monomères de

(a) 98 à 90% en poids d'anhydride maléique et
(b) 2 à 10% en poids d'esters hydroxyalkyliques d'acides mono- et dicarboxyliques à insaturation éthylénique, qui comportent de 3 à 5 atomes de carbone et d'alcools dihydroxylés en $C_2$ à $C_6$, d'acétate de vinyle, de propionate de vinyle, d'acide acrylique, d'acide méthacrylique, d'acide vinylphosphonique et/ou d'acide acrylamidométhylpropanesulfonique.

**5.** Procédé suivant la revendication 5, caractérisé en ce que l'on utilise les agents de réticulation en une proportion de 0,2 à 5% en poids, par rapport aux monomères (a), (b) et (c).

**6.** Procédé suivant les revendications 5 et 6, caractérisé en ce que, à titre d'agents de réticulation, on utilise des diacrylates ou diméthacrylates de polyéthylèneglycols ou de polypropylèneglycols qui

possèdent des masses moléculaires atteignant à chaque fois 200 à 9000, des esters vinyliques d'acides carboxyliques à insaturation éthylénique en $C_3$ à $C_6$, des esters vinyliques d'acides carboxyliques saturés, qui contiennent au moins deux radicaux carboxyle, des éthers di- et polyvinyliques d'alcools au moins dihydroxylés, des esters allyliques d'acides carboxyliques à insaturation éthylénique, des éthers allyliques d'alcools polyhydroxylés, le méthylènebisacrylamide, le méthylènebisméthacrylamide, la divinyléthylèneurée, la divinylpropylèneurée, le divinylbenzène, le divinyldioxanne, ou leurs mélanges.

7. Procédé suivant les revendications 1 à 7, caractérisé en ce que, à titre d'amorceurs de polymérisation, on utilise le per-2-éthylnexanoate de tert-butyle, le permaléate de tert-butyle, le perpivalate de tert-butyle, le perbenzoate de tert-butyle, ou leurs mélanges.

8. Utilisation de copolymères solubles dans l'eau, que l'on peut obtenir par la copolymérisation de

(a) 99 à 80% en poids d'anhydride maléique,
(b) 1 à 20% en poids d'un monomère à insaturation monoéthylénique, copolymérisable avec l'anhydride maléique et, éventuellement,
(c) jusqu'à 10% en poids d'au moins un agent de réticulation contenant au moins deux doubles liaisons éthyléniquement insaturées, où la somme des pourcentages (a), (b) et (c) est toujours égale à 100,

dans un hydrocarbure aromatique, à des températures de 60 à 200 °C, en présence de 1 à 20% en poids, par rapport aux monomères (a), (b) et (c) mis en oeuvre, de peroxyesters qui dérivent d'acides carboxyliques saturés ou à insaturation monoéthylénique et l'hydrolyse des radicaux anhydride des copolymères, à titre d'agents de traitement pour réduire les dépôts de calcin, de tartre et les incrustations et les séparations hydrotimétriques dans des systèmes de conduite d'eau.